# EUROPÄISCHE PATENTSCHRIFT

(11) **EP 4 396 846 B1**
(45) Veröffentlichungstag und Bekanntmachung des Hinweises auf die Patenterteilung: **09.07.2025**
(21) Anmeldenummer: 22769089.8
(22) Anmeldetag: 29.08.2022
(51) Int. Cl.: G21F 9/14, G21F 9/12, G21F 9/00, G21F 9/30, G21F 9/32, B01F 27/90, C02F 11/08, B01F 27/232, B01F 33/80

(54) **IONENTAUSCHERHARZBEHANDLUNGSSYSTEM UND VERFAHREN DAZU**
ION EXCHANGE RESIN TREATMENT SYSTEM AND CORRESPONDING METHOD
SYSTÈME DE TRAITEMENT DE RÉSINE ÉCHANGEUSE D'IONS ET PROCÉDÉ CORRESPONDANT

(30) Priorität: 04.09.2021 DE 102021004501
(43) Veröffentlichungstag der Anmeldung: 10.07.2024
(73) Patentinhaber: Westinghouse Electric Germany GmbH, 68167 Mannheim (DE)
(72) Erfinder: BLASE, Michael, 63538 Grosskrotzenburg (DE)
(74) Vertreter: Eickmeyer, Dietmar
(86) Internationale Anmeldenummer: PCT/EP2022/000078
(87) Internationale Veröffentlichungsnummer: WO 2023/030673

(56) Entgegenhaltungen:
- DE-A1- 10 140 525
- DE-A1- 102012 012 828
- US-B1- 6 422 492

## Beschreibung

Die Erfindung betrifft ein lonentauscherharzbehandlungssystem zur Behandlung von radioaktiv belastetem lonentauscherharzabfall, wobei ein Überkritischeswasseroxidationsreaktor eingangsseitig mit einer Luftzufuhreinrichtung, mit einer Abfallzuführeinrichtung, mit einer Brennstoffzuführeinrichtung und einer Wasserzuführeinrichtung verbunden ist, wobei der Abfallzuführeinrichtung eine lonentauscherharzzerkleinerungssystem vorgeschaltet ist, das ein zu behandelndes Ionentauscherharz so lange zerkleinert bis eine vorgegebene lonentauscherharzpartikelgröße des zu zerkleinernden Ionentauscherharzes unterschritten ist, wobei das zerkleinerte lonentauscherharz der Abfallzuführeinrichtung zugeführt ist, wobei der Überkritischeswasseroxidationsreaktor ausgangsseitig mit einer Separatorvorrichtung verbunden ist, wobei durch die Separatorvorrichtung die vom Überkritischeswasseroxidationsreaktor erhaltene Mischung aus Gas und Flüssigkeit in die jeweilige Phase getrennt ist und ein abgeschiedenes Gas einem Gasauslasselement und eine abgeschiedene Flüssigkeit an einem Flüssigkeitsauslasselement bereitgestellt ist, und wobei durch eine Steuerungseinrichtung wenigstens der Überkritischeswasseroxidationsreaktor, die Luftzufuhreinrichtung, die Abfallzuführeinrichtung, die Brennstoffzuführeinrichtung und die Wasserzuführeinrichtung geregelt ist sowie ein Verfahren dazu.

Es ist allgemein bekannt, dass in kerntechnischen Anlagen und Kraftwerken zur Reinigung von Wasser beziehungsweise Abwasser Ionentauscherharze eingesetzt werden. Insbesondere in kerntechnischen Bereich müssen dann auch radioaktiv belasteten Ionentauscherharze zum Teil aufwendig behandelt werden bevor sie entsorgt werden können. Hierbei werden oft Verfahren wie Entwässerung und/oder Trocknung mit anschließender Verfestigung in einer Polymer- oder Bitumenmatrix oder ein Zementierungsverfahren eingesetzt.

Vor der Anwendung eines Entsorgungsverfahrens können die kugelförmigen Ionentauscherharze entweder direkt verarbeitet werden oder sie werden zuvor behandelt, beispielsweise mit entsprechenden Mühlen aufgemahlen, also zerkleinert. Dabei werden die Ionentauscherharze mit Wasser suspendiert und über die Mühle geführt, um das gewünschte Zerkleinerung zu erreichen. Eine Aufmahlung von lonentauscherharzen erfolgt, um im anschließenden Entsorgungsprozess bessere Ergebnisse zu erreichen, wie zum Beispiel eine verringerte Aufschwimmneigung von gemahlenen Harzen beim Einbinden in eine Entsorgungsmatrix, einen verbesserten Wärmeübergang durch eine vergrößerte Oberfläche bei der Trocknung und somit kürzere Trocknungszeiten oder verbesserte Komprimierungseigenschaften beim Hochdruckverpressen. Zur Verbesserung des Entsorgungsprozesses ist beispielsweise aus der deutschen Patentanmeldung DE 10 2012 012 828 A1 eine Ionenaustauscherharzzerkleinerungsvorrichtung bekannt geworden, die ein besonders gutes Mahlergebnis liefert, um den anschließenden Trocknungszeiten zu verkürzen oder die Komprimierungseigenschaften beim Hochdruckverpressen - wie vorstehend erwähnt - zu verbessern.

Nachteilig an diesem Stand der Technik ist, dass der Vorgang des Entsorgens des radioaktiven Ionentauscherharzes selbst zwar verbessert wird, jedoch bleibt das Volumen des Ionentauscherharzes und der daran gebundenen radioaktiven Stoffe, das in einer entsprechenden Lagereinrichtung zwischen- oder endgelagert werden muss, durch die Vorbehandlung vor dem Entsorgungsprozess im Wesentlichen unverändert und vergleichsweise hoch. Auch bei einer weiteren Vorbehandlung des lonentauscherharzes bleibt ein radioaktives Feststoffabfallvolumen aus Ionentauscherharz und radioaktiven Feststoffen unverändert hoch.

Zudem ist aus der Offenlegungsschrift DE 10140525 A1 ein Verfahren zur Behandlung von radioaktivem Abfall und ein System zur Durchführung des Verfahrens bekannt geworden. Dort wird in einem Behälter gelagertes kontaminiertes Ionenaustauscherharz einer kerntechnischen Anlage den Behälter entnommen und einem Oxidationsreaktor zugeführt. Es hat sich herausgestellt, dass Ionenaustauscherharz - wie aus einer kerntechnischen Anlage entnommen - nicht zu optimalen Ergebnissen bei der Behandlung der organischen Anteile des Ionentauscherharzes führen und entweder nach dem Oxidationsprozess Reste an Ionenaustauscherharz verbleiben oder der Oxidationsprozess nicht über längere Zeit stabil ausführbar ist.

Ausgehend von diesem Stand der Technik ist es Aufgabe der Erfindung, ein Ionentauscherharzbehandlungssystem bereitzustellen, bei welchem ein lonentauscherharzbehandlungssystem mit einem Überkritischeswasseroxidationssystem zur Behandlung des Ionentauscherharzes eines vorgegebenen Volumens an radioaktivem Ionenaustauscherharz verbessert wird. Es wird auch ein Verfahren angegeben, bei dem das Volumen an radioaktiven Feststoffen zur Zwischen- oder Endlagerung reduziert ist.

Die Aufgabe wird gelöst durch ein lonentauscherharzbehandlungssystem zur Behandlung von radioaktiv belastetem lonentauscherharzabfall, wobei ein Überkritischeswasseroxidationsreaktor eingangsseitig mit einer Luftzufuhreinrichtung, mit einer Abfallzuführeinrichtung, mit einer Brennstoffzuführeinrichtung und einer Wasserzuführeinrichtung verbunden ist, wobei der Abfallzuführeinrichtung ein lonentauscherharzzerkleinerungssystem vorgeschaltet ist, die ein zu behandelndes lonentauscherharz so lange zerkleinert bis eine vorgegebene Partikelgröße des zu zerkleinernden Ionentauscherharzes unterschritten ist, wobei das zerkleinerte lonentauscherharz der Abfallzuführeinrichtung zugeführt ist, wobei der Überkritischeswasseroxidationsreaktor ausgangsseitig mit einem Separatorvorrichtung verbunden ist, wobei durch die Separatorvorrichtung die vom Überkritischeswasseroxidationsreaktor erhaltene Mischung aus Gas und Flüssigkeit in die jeweilige Phase getrennt ist und ein abgeschiedenes Gas an einem Gasauslasselement und eine abgeschiedene Flüssigkeit an einem Flüssigkeitsauslasselement bereitgestellt ist, und wobei durch eine Steuerungseinrichtung der Überkritischeswasseroxidationsreaktor, die Luftzufuhreinrichtung, die Abfallzuführeinrichtung, die Brennstoffzuführeinrichtung und die Wasserzuführeinrichtung geregelt ist. Das Ionentauscher Harzbehandlungssystem ist dadurch gekennzeichnet, dass das lonentauscherharzzerkleinerungssystem einen Behälter aufweist, aus dem mit einer Zirkulationspumpe eine Suspension aus Flüssigkeit und Ionentauscherharz entnommen und einer lonentauscherharzzerkleinerungsvorrichtung zugeführt ist, und dass durch eine Leitung die Suspension aus zerkleinertem Ionentauscherharz und der Flüssigkeit zurück in den Behälter gefördert ist, dass durch eine Entnahmepumpe die Suspension dem Behälter entnommen ist und einer Klassifikationsvorrichtung zugeführt ist, dass durch die Klassifikationsvorrichtung Ionentauscherharz, das die vorgegebene lonentauscherharzpartikelgröße überschreitet, aus der Suspension ausgeschieden ist, dass wenigstens die ausgeschiedenen lonentauscherharzpartikel zurück in den Behälter geführt sind, und dass Ionentauscherharz, das gleich groß oder kleiner ist als die vorgegebene lonentauscherharzpartikelgröße, in einem verbleibenden Flüssigkeitsanteil als klassifizierte Suspension an einem Ausgangselement an der Klassifikationsvorrichtung bereitgestellt ist, dass die durch die Klassifikationsvorrichtung bereitgestellte klassifizierte Suspension einer Konzentrationsmessvorrichtung zugeführt ist, dass durch die Konzentrationsmessvorrichtung ein Konzentrationswert an lonentauscherharzpartikel in der Suspension bestimmt ist, dass die klassifizierte Suspension erst bei einem Erreichen oder bei einem Überschreiten des bestimmten Konzentrationswerts im Vergleich zu einem festgelegen Konzentrationswert die klassifizierte Suspension zur Abnahme durch eine zweite Pumpvorrichtung bereitgestellt ist, und dass bei einem Unterschreiten des festgelegten Konzentrationswertes die klassifizierte Suspension zurück in den Behälter geleitet ist.

Die Grundidee der Erfindung besteht darin, den radioaktiven lonentauscherharzabfall nicht mehr wie seither zu Zementieren oder durch Bindung in einer anderen Matrix zu immobilisieren und dann zu lagern, sondern die organischen Bestandteile, also insbesondere das Ionentauscherharz zunächst chemisch/physikalisch in einem Überkritischeswasseroxidationsreaktor, kurz Oxidationsreaktor, für einen Prozess einer überkritischen Wasseroxidation zu zerlegen. Der Prozess der überkritischen Wasseroxidation ist so eingestellt, dass am Prozessende, also am Ausgang des Oxidationsreaktors, lediglich Kohlendioxid und Luftbestandteile als Gas sowie Wasser und in Wasser gelöste Salze beziehungsweise Ionen als Flüssigkeit vorhanden sind. Der Prozess der überkritischen Wasseroxidation ist dem Fachmann für andere, insbesondere gefährliche industrielle Abfälle bekannt, und ist für die Behandlung von lonentauscherharzabfall wie folgt verändert.

Zunächst werden dem Oxidationsreaktor eingangsseitig über entsprechende Zuführeinrichtungen lonentauscherharzabfall, Brennstoff, Wasser sowie Luft zugeführt. Die Mengen- beziehungsweise Stoffströme der einzelnen Stoffe, die in den Oxidationsreaktor eingebracht werden, sind dabei über eine Steuerungseinrichtung jeweils einzelnen in ihrer Menge, ihrer Temperatur und ihrem jeweiligen Druck so geregelt, dass als Ausgangsstoffe die vorstehend genannten Endstoffe entstehen. Bedarfsweise kann auch Natronlauge für eine pH-Wert Anhebung in das Wassers für den Oxidationsreaktor geben werden.

Es hat sich herausgestellt, dass es für den Gesamtprozess vorteilhaft ist, wenn das Ionentauscherharz des lonentauscherharzabfalls vor der Zuführung in den Oxidationsreaktor zerkleinert wird. Je kleiner das Ionentauscherharz zermahlen wird, je kürzer fällt die Prozesszeit im Oxidationsreaktor aus, bis das lonentauscherharz vollständig zerlegt ist, und je höher ist der Wirkungsgrad des Oxidationsreaktors bei der Zerlegung des Ionentauscherharzes. Der Gesamtprozess läuft dauerhaft stabil und ist insgesamt verbessert. Eine typische Partikelgröße für ein lonentauscherharz ist 0,6 mm bis 1 mm lonentauscherharzpartikelgröße, die idealerweise durch den Zerkleinerungsprozess auf eine lonentauscherharzpartikelgröße von kleiner als 100 µm, vorzugsweise jedoch kleiner als 50 µm, gebracht wird. Durch die Zerkleinerung ist in vorteilhafter Weise ein stabiler Betrieb des lonentauscherharzbehandlungssystems ermöglicht. Auch eine mögliche Verstopfung der Zuleitung des Ionentauscherharze zum Oxidationsreaktor durch zu große lonentauscherharzpartikel oder Verknüpfungen davon sind vermieden. Zudem verkürzt sich eine Prozesszeit zur Behandlung des Ionentauscherharze im Oxidationsreaktor. Auch auf diese Weise ist sichergestellt, dass das Ionentauscherharz im Oxidationsreaktor vollständig zerlegt wird.

Nach dem Durchlaufen der überkritischen Wasseroxidation im Oxidationsreaktor sorgt eine Separatorvorrichtung dafür, dass die gasförmigen und die flüssigen Bestandteile separiert werden und an verschiedenen Ausgängen der Separatorvorrichtung zur Verfügung gestellt sind. Vorteilhaft ist es zudem, dass alle radioaktiven Stoffe jetzt lediglich als gelöste Salze beziehungsweise Ionen in nichtradioaktivem Wasser vorhanden sind. Im Ergebnis ist das ursprüngliche Feststoffvolumen des Ionentauscherharzabfalls vorteilhafterweise jedenfalls um das Feststoffvolumen des lonentauscherharzes reduziert. In einem sich der beschriebenen Behandlung des Ionentauscherharzabfalls anschließenden Entsorgungsprozess kann das Volumen der Flüssigkeit durch Entzug von Wasser weiter verringert werden. Derart findet ein Auf konzentrieren der in der Flüssigkeit enthaltenen Salze beziehungsweise Ionen statt.

Die Zwischen- beziehungsweise Endlagerung des reduzierten radioaktiven Abfalls in der Flüssigkeit kann man zum Beispiel mit der üblichen Zementierung erfolgen oder auf andere dem Fachmann bekannte Weise.

Zur weiteren Verbesserung des lonentauscherharzbehandlungssystems weist dieses weitere Merkmale auf, nämlich dass das lonentauscherharzzerkleinerungssystem einen Behälter aufweist, aus dem mit einer Zirkulationspumpe eine Suspension aus Flüssigkeit und lonentauscherharz entnommen und einer lonentauscherharzzerkleinerungsvorrichtung zugeführt ist, und dass durch eine Leitung die Suspension aus zerkleinertem lonentauscherharz und der Flüssigkeit zurück in den Behälter gefördert ist. Eine wie hier vorgeschlagene stetige Entnahme eines Teils der Suspension aus dem Behälter durch die Zirkulationspumpe mit anschließender Zerkleinerung des in der Suspension enthaltenen Ionentauscherharzes ergibt ein lonentauscherharzzerkleinerungssystem, das mit vergleichsweise kleinen Komponenten realisiert ist und gleichwohl eine vorgegebene Zerkleinerung des Ionentauscherharzes liefert. Die Zirkulation mit der Zerkleinerung wird während des Betriebs des lonentauscherharzzerkleinerungssystem ständig fortgeführt, und derart praktisch alle Partikel des Ionentauscherharzes auf eine bestimmte lonentauscherharzpartikelgröße zerkleinert, die so bemessen ist, dass sie für den anschließenden Prozess der überkritischen Wasseroxidation optimal ist.

Das lonentauscherharzzerkleinerungssystem ist weiter verbessert, wenn durch eine Entnahmepumpe die Suspension dem Behälter entnommen ist und einer Klassifikationsvorrichtung zugeführt ist, dass durch die Klassifikationsvorrichtung lonentauscherharz, das eine vorgegebene lonentauscherharzpartikelgröße überschreitet, aus der Suspension ausgeschieden ist und wenigstens die ausgeschiedenen lonentauscherharzpartikel zurück in den Behälter geführt sind. Die Entnahmepumpe wird zusammen mit dem lonentauscherharzzerkleinerungssystem gestartet oder beispielsweise auch erst nach einer bestimmten Zeitspanne, also beispielsweise nach 5 Minuten nach einem Start der lonentauscherharzzerkleinerungsvorrichtung, um der Vorrichtung einen bestimmten Betriebsvorlauf zu gewähren.

Dann wird durch die Klassifikationsvorrichtung festgestellt, welche lonentauscherharzpartikel größer sind als eine zuvor festgelegte lonentauscherharzpartikelgröße. Die zu großen lonentauscherharzpartikel werden zurück in den Behälter geleitet. Ein anderer Teil der lonentauscherharzpartikel, nämlich ein Restteil in der Suspension, deren Ionentauscherharzpartikelgröße dann gleich groß oder kleiner sind als die zuvor festgelegte lonentauscherharzpartikelgröße, steht dann für die Zuführung zum Oxidationsreaktor bereit. Die Klassifikationsvorrichtung kann er beispielsweise eine Dekanterzentrifuge sein, die die zu großen lonentauscherharzpartikel aus der Suspension entfernt, die dann ohne Flüssigkeitsanteil in den Behälter zurückgeleitet werden. Die Klassifikationsvorrichtung kann aber auch beispielsweise als Hydrozyk-Ion ausgestaltet sein, wobei dann die zu großen lonentauscherharzpartikel mit einem Flüssigkeitsanteil zurück in den Behälter geführt werden.

Eine zusätzliche Verbesserung des lonentauscherharzzerkleinerungssystem sieht vor, dass die durch die Klassifikationsvorrichtung bereitgestellte klassifizierte Suspension einer Konzentrationsmeßvorrichtung zugeführt ist, dass durch die Konzentrationsmeßvorrichtung ein Konzentrationswert an lonentauscherharzpartikel in der Suspension bestimmt ist, dass die klassifizierte Suspension erst bei einem Erreichen oder bei einem Überschreiten des bestimmten Konzentrationswerts im Vergleich zu einem festgelegen Konzentrationswert die klassifizierte Suspension zur Abnahme durch eine zweite Pumpvorrichtung bereitgestellt ist, und dass bei einem Unterschreiten des festgelegten Konzentrationswertes die klassifizierte Suspension zurück in den Behälter geleitet ist. Die Konzentrationsmessvorrichtung stellt also erfindungsgemäß sicher, dass nur eine solche klassifizierte Suspension zum Prozess der überkritischen Wasseroxidation zugeführt ist, die für den Prozess vorgesehen und optimal ist. Der festgelegte Konzentrationswert ist entsprechend vorgegeben. Beispielsweise hat sich herausgestellt, dass ein Volumenanteil von 30 % von zerkleinerten Ionentauscherharz in der klassifizierten Suspension zu optimalen Ergebnissen bei dem Prozess der überkritischen Wasseroxidation führt.

Um besonders zuverlässige Ergebnisse für den Konfigurationswert zu erhalten, wird die Konzentrationsmeßvorrichtung bevorzugt als eine Dichtemessvorrichtung oder eine Trübungsmeßvorrichtung ausgeführt.

Eine weitere bevorzugte Ausgestaltung des lonentauscherharzbehandlungssystems ist dadurch gekennzeichnet, dass der Behälter eine erste Rührvorrichtung aufweist, die ein Rührelement aufweist, durch das die Verteilung der lonentauscherharzpartikel in der Flüssigkeit im Behälter homogenisiert ist. Durch die erste Rührvorrichtung wird ein Absetzen der lonentauscherharzpartikel in der Flüssigkeit vermieden und eine möglichst gleiche Verteilung der lonentauscherharzpartikel in der Flüssigkeit erreicht. Mit einer homogenen Suspension aus lonentauscherharzpartikeln und Flüssigkeit wird beispielsweise die Zerkleinerung des Ionentauscherharze im lonentauscherharzzerkleinerungssystem verbessert in dem der Wirkungsgrad durch eine homogene Suspension erhöht ist.

Eine weitere Verbesserung des lonentauscherharzbehandlungssystem sieht vor, dass der Behälter eine zweite Rührvorrichtung aufweist, die ein Zerkleinerungsrührelement aufweist, durch das die lonentauscherharzpartikel in der Flüssigkeit im Behälter zerkleinert sind. Die zweite Rührvorrichtung wirkt also als Vorzerkleinerungsvorrichtung, die eine mögliche Verklumpung beziehungsweise Verbackung von lonentauscherharzpartikel auflöst oder zerkleinert, so dass im Wesentlichen nur noch einzelne lonentauscherharzpartikel in der Suspension vorliegen. Das ist insbesondere dann von Vorteil, wenn die lonentauscherharzzerkleinerungsvorrichtung einen optimalen Wirkungsgrad für lonentauscherharzpartikelgröße bis zu einer bestimmten Größe hat.

Vorteilhaft ist es auch, wenn das lonentauscherharzbehandlungssystem dadurch gekennzeichnet ist, dass durch die Steuerungseinrichtung auch die lonentauscherharzzerkleinerungsvorrichtung gesteuert ist. Üblicherweise hat die lonentauscherharzzerkleinerungsvorrichtung eine separate Steuerungsvorrichtung, die über eine entsprechende Schnittstelle gegebenenfalls erforderliche oder gewünschte Informationen von der Steuerungseinrichtung erhält beziehungsweise mit dieser austauscht, und die alle für die Zerkleinerung des Ionentauscherharzes erforderlichen Steuer- und Regelungsvorgänge regelt. Diese Steuer- und Regelungsvorgänge können aber auch von der Steuerungseinrichtung übernommen werden. Dann entfällt vorteilhafterweise die Steuerungsvorrichtung.

Eine alternative Ausgestaltung des lonentauscherharzbehandlungssystems sieht vor, dass das abgeschiedene Gas vom Gasauslasselement einem ersten Kondensator zugeführt ist, und dass die abgeschiedene Flüssigkeit vom Flüssigkeitsauslasselement, abhängig von den Inhaltsstoffen der abgeschiedenen Flüssigkeit entweder einem Verdampfer und anschließend ein Wasserdampf vom Verdampfer einem zweiten Kondensator oder einer Fasstrocknungseinrichtung zugeführt ist. Bei dieser Ausgestaltungsvariante ist das Abfallvolumen an radioaktiven Stoffen weiter reduziert. Zudem fällt in den Kondensatoren Wasser an, dass nur noch geringste Mengen an sonstigen Stoffen oder Ionen enthält, so dass eine weitere Abwasserbehandlung nicht mehr erforderlich ist. So wird beispielsweise das Kondensat in einem Kondensatbehälter gesammelt und anschließend entweder zur Wasserzuführeinrichtung zurück gefördert - und dort wiederum in den Prozess der überkritischen Wasseroxidation einsetzbar ist - oder aus Sicherheitserwägungen gleichwohl in ein Abwasserbehandlungssystem des Kernkraftwerkes, in dem das lonentauscherharzbehandlungssystem steht, eingeleitet oder in ein vorhandenes Wassernetz abgegeben. Auf diese Weise ist das Abfallvolumen durch den Entzug von Wasser in vorteilhafter Weise weiter reduziert und zudem das ursprünglich in der Flüssigkeit enthaltene Wasser einer weiteren Verwendung zugeführt.

Die erfindungsgemäß gestellte Aufgabe wird auch gelöst durch ein Verfahren zur Behandlung von radioaktiv belastetem Ionentauscherharz, das folgende Schritte umfasst:
- Zerkleinern von radioaktiv belastetem lonentauscherharz bis eine vorgegebene lonentauscherharzpartikelgröße in einer Suspension aus Flüssigkeit und Ionentauscherharz in einem Behälter unterschritten und als klassifizierte Suspension bereitgestellt wird,
- Entnahme eines weiteren Teilstromes an klassifizierter Suspension und Überwachen eines Konzentrationswertes an lonentauscherharzpartikel im weiteren Teilstrom,
- Breitstellen der klassifizierten Suspension erst bei einem Erreichen oder bei einem Überschreiten des bestimmten Konzentrationswerts im Vergleich zu einem festgelegen Konzentrationswert für die Abnahme durch eine zweite Pumpvorrichtung, wobei bei einem Unterschreiten des bestimmten Konzentrationswerts im Vergleich zu dem festgelegen Konzentrationswert die klassifizierte Suspension zurück in den Behälter geleitet wird,

- Zuführen von Luft sowie einer Suspension aus Brennstoff, Wasser und zerkleinertem Ionentauscherharz als klassifizierte Suspension mit wenigstens einem bestimmten Konzentrationswert in einen Überkritischeswasseroxidationsreaktor,
- Regelung jeder dem Überkritischeswasseroxidationsreaktor zugeführten Menge an Luft, an Brennstoff, an Wasser und an zerkleinertem lonentauscherharz, so dass durch den Überkritischeswasseroxidationsreaktor alle organischen Anteile in der Suspension in eine Mischung aus Gas, das Kohlendioxid und Wasserdampf aufweist, und Flüssigkeit, die Wasser und gelöste oder freie nichtorganische Ionen aufweist, aufgespalten werden,
- Abscheiden von Gas aus der Mischung.

Das erfindungsgemäße Verfahren sieht also vor, dass ein radioaktiv belastetes lonentauscherharz zunächst zerkleinert wird, bis die lonentauscherharzpartikel so klein sind, dass der anschließende Prozess der überkritischen Wasseroxidation vergleichsweise schnell und mit einem besonders hohen Wirkungsgrad verläuft, so dass die organischen Bestandteile in der Suspension, insbesondere das lonentauscherharz, vollständig in anorganische Bestandteile aufgespalten werden. Nach dem Durchlaufen der überkritischen Wasseroxidation verbleibt eine Mischung aus Gas und Flüssigkeit, welche Mischung nur noch aus anorganischen Stoffen besteht. Aus der Mischung werden eventuell vorhandenes Gas, insbesondere Kohlendioxid und gegebenenfalls Stickoxide beziehungsweise Luftanteile abgeschieden, die jedoch nicht radioaktiv sind. Die Radioaktivität verbleibt in der Flüssigkeit, die jedoch keine Feststoffe mehr aufweist und somit zumindest um das Volumen der lonentauscherharzpartikel verringert ist, so dass das Feststoffabfallvolumen insgesamt, also beispielsweise das Volumen, das mit einem Entsorgungsverfahren zur Zwischen- oder Endlagerung vorbereitet wird, - auch nach einem eventuellen Entzug von Wasser aus der Flüssigkeit - entsprechend verringert ist. Das erfindungsgemäße Verfahren wird vorteilhafterweise mit dem vorstehend näher erläuterten lonentauscherharzbehandlungssystem durchgeführt.

Zudem ist es für das Verfahren von Vorteil, wenn das abgeschiedene Gas in einem ersten Kondensator getrocknet und anschließend in die Umgebung abgegeben wird. Das abgeschiedene Gas enthält keine radioaktiven Stoffe und kann somit problemlos in die Umgebung abgegeben werden. Eine weitere Abfallbehandlung fällt vorteilhafterweise nicht an.

Eine weitere Verfahrensvariante sieht vor, dass die Flüssigkeit aufgrund ihre Inhaltsstoffe entweder einem Verdampfer zugeleitet wird, durch den vorhandenes Wasser in der Flüssigkeit verdampft wird und verbleibende feuchte Residuen einer Fasstrocknungseinrichtung zugeführt werden, wobei anschließend der Wasserdampf in einem zweiten Kondensator zu Wasser kondensiert wird, oder die Flüssigkeit unmittelbar einer Fasstrocknungseinrichtung zugeführt wird, in der vorhandene Wasseranteile der Flüssigkeit so lange entzogen werden, bis Residuen verbleiben. Auf diese Weise wird die Abfallmenge um den Wasseranteil reduziert. Das entzogene Wasser selbst ist nicht oder nur geringfügig radioaktiv und kann damit entweder eine Wasseraufbereitung zugeführt oder - falls die geringe Radioaktivität unterhalb entsprechender Grenzwerte liegt - an die Umgebung abgegeben.

Die Radioaktivität verbleibt vollständig oder zumindest nahezu vollständig in den Residuen, die nach dem Entzug von Wasser beziehungsweise Feuchtigkeit nur noch ein vorteilhaft kleines Gesamtvolumen aufweisen, das letztlich in ein Endlager Verbracht werden kann oder durch ein Entsorgungsverfahren auf eine Zwischen- oder Endlagerung vorbereitet wird. Die Entscheidung, ob die Flüssigkeit zunächst dem Verdampfer oder sofort der Fasstrocknungseinrichtung zugeführt wird, kann entweder empirisch, nämlich aufgrund der in den überkritischen Oxidationsprozess zu geleiteten Ionentauscherharz Abfälle entschieden werden, oder eine entsprechend dafür eingerichtete Mess- und Analyseeinrichtung analysiert die in der Flüssigkeit enthaltenen Stoffe, wobei die Zuleitung der Flüssigkeit zum Verdampfer oder zur Fasstrocknungseinrichtung dann durch die Steuerungseinrichtung aufgrund der Analyse gefällt wird.

Von Vorteil ist es auch, wenn das Verfahren dadurch gekennzeichnet ist, dass Wasser aus dem ersten oder/und aus dem zweiten Kondensator zu einem Kondensatbehälter geleitet wird, und dass ein im Kondensatbehälter gesammeltes Wasser wahlweise in ein Abwasseraufbereitungssystem oder zu der Wasserzuführeinrichtung geleitet wird. Das im Kondensatbehälter gesammelte Wasser ist nicht oder nur leicht radioaktiv und kann daher besonders einfach wiederverwendet oder in die Umgebung, gegebenenfalls nach weiterer Aufbereitung, abgegeben werden.

Eine vorteilhafte Variante des Verfahrens ist dadurch gekennzeichnet, dass eine im Behälter befindliche Suspension aus Wasser und lonentauscherharzpartikeln vor dem und während des Zerkleinerns des lonentauscherharzes homogenisiert wird. Mit einer homogenisierten Suspension ist insbesondere der Wirkungsgrad bei dem Zerkleinern des Ionentauscherharzes, beispielsweise mit dem erfindungsgemäßen lonentauscherharzzerkleinerungssystem, in vorteilhafter Weise erhöht.

Ein weiterer Vorteil im Verfahren wird erreicht, wenn das im Behälter befindliche Ionentauscherharz in der Suspension durch eine zweite Rührvorrichtung vorzerkleinert wird. Mit einer Vorzerkleinerung werden insbesondere feste Bestandteile der Suspension, die größer sind als die durchschnittliche Partikelgröße des lonentauscherharze - typischerweise ca. 1mm - bereits zerkleinert. Das ist deshalb vorteilhaft, da ein lonentauscherharzzerkleinerungssystem in der Regel einen optimalen Wirkungsgrad aufweist, wenn die zu zerkleinerten Partikel eine bestimmte maximale Größe aufweisen. Insgesamt ist daher die Effektivität der lonentauscherharzzerkleinerung und damit auch des lonentauscherharzbehandlungssystems vorteilhaft gesteigert.

Eine vorteilhafte Alternative des Verfahrens sieht vor, dass die im Behälter befindliche Suspension mit einer Zirkulationspumpe zu einer lonentauscherharzzerkleinerungsvorrichtung gefördert wird, dass das Ionentauscherharz in der Suspension in der lonentauscherharzzerkleinerungsvorrichtung zerkleinert wird, und dass das Ionentauscherharz nach einem Durchlaufen der lonentauscherharzzerkleinerungsvorrichtung als zerkleinertes Ionentauscherharz in der Suspension zurück in den Behälter gefördert wird. Im Grunde entsteht ein Kreislauf, bei dem Suspension den Behälter entnommen wird, mit der Ionentauscherharzzerkleinerungsvorrichtung das Ionentauscherharz zerkleinert und anschließend die Suspension zurück in den Behälter gefördert wird. Dementsprechend ist es ermöglicht mit der Suspension die lonentauscherharzzerkleinerungsvorrichtung so lange und wiederholt zu durchlaufen, bis eine gewünschte Zerkleinerung eines bestimmten Anteiles des lonentauscherharzes erreicht ist. Entsprechend klein kann die Ionentauscherharzzerkleinerungsvorrichtung ausgestaltet sein im Vergleich zu einer Mühle, die nur einmalig mit lonentauscherharz durchlaufen wird und den bestimmten Anteil an zerkleinerten Ionentauscherharz ergeben soll.

Ein weiterer Vorteil ergibt sich, wenn das lonentauscherharz in der Suspension eine vorgegebene Zeitspanne von der lonentauscherharzzerkleinerungsvorrichtung zerkleinert wird, bevor eine Entnahmepumpe aktiviert wird, die einen Teilstrom der Suspension aus dem Behälter einer Klassifikationsvorrichtung zuführt, dass durch die Klassifikationsvorrichtung solche lonentauscherharzpartikel aus der Suspension separiert, die eine festgelegte lonentauscherharzpartikelgröße überschreiten, und dass die separierten lonentauscherharzpartikel zusammen mit einem Teilstrom der Suspension zurück in den Behälter geleitet werden, und dass die restliche Suspension an einem Ausgangselement an der Klassifikationsvorrichtung bereitgestellt ist. Durch das Aktivieren der Entnahmepumpe erst nach einer vorgegebenen Zeitspanne ist ein vergleichsweise großer Teil des Ionentauscherharze in der Suspension bereits durch die lonentauscherharzzerkleinerungsvorrichtung auf die erforderliche lonentauscherharzpartikelgröße reduziert, bevor sie der Klassifikationsvorrichtung zugeführt wird. Die Klassifikationsvorrichtung ist dann eine Art Kontrollvorrichtung, die zu große lonentauscherharzpartikel erkennt, abtrennt und in den Behälter zurückführt. Nur lonentauscherharzpartikel in der Suspension, die eine erforderliche Größe unterschreiten werden demnach für die Weiterbehandlung im Verfahren als klassifizierte Suspension bereitgestellt.

Bei einer weiteren vorteilhaften Ausgestaltungsvariante des Verfahrens ist es vorgesehen, dass die durch die Klassifikationsvorrichtung bereitgestellte klassifizierte Suspension einer Konzentrationsmeßvorrichtung zugeführt ist, dass durch die Konzentrationsmeßvorrichtung ein Konzentrationswert an lonentauscherharzpartikel in der klassifizierten Suspension bestimmt ist, dass die klassifizierte Suspension erst bei einem Erreichen oder bei einem Überschreiten des bestimmten Konzentrationswerts im Vergleich zu einem festgelegen Konzentrationswert die klassifizierte Suspension zur Abnahme durch eine zweite Pumpvorrichtung bereitgestellt ist, und dass bei einem Unterschreiten des festgelegten Konzentrationswertes die klassifizierte Suspension zurück in den Behälter geleitet ist. Auf diese Weise ist nicht nur erreicht, dass die Partikelgröße der lonentauscherharzpartikel eine für die überkritischen Wasseroxidation vorteilhafte Größe aufweisen, sondern auch die Konzentration der Ionentauscherharzpartikel in der klassifizierten Suspension auf einen für die überkritischen Wasseroxidation optimalen Konzentrationswert aufweist. Das ist beispielsweise bei einer Volumenkonzentration von 30 % an lonentauscherharzpartikel in der klassifizierten Suspension der Fall.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1 ,: ein exemplarisches lonentauscherharzbehandlungssystem und
- Fig. 2: ein exemplarisches lonentauscherharzzerkleinerungssystem.

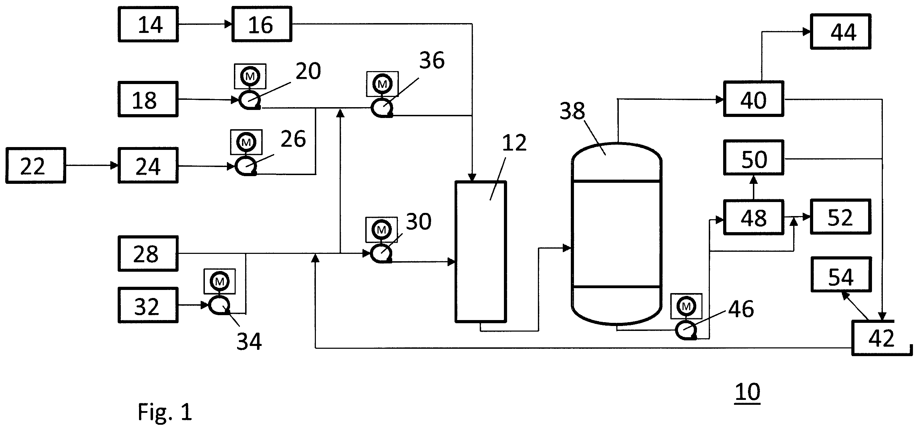

Fig. 1 zeigt ein Prozessschaubild eines Ausführungsbeispiels für ein Ionentauscherharzbehandlungssystem 10 bei dem ein Oxidationsreaktor 12 als Überkritischeswasseroxidationsreaktor verschiedene Eingangsstoffe für einen Wasseroxidationsprozess, der überkritisches Wasser für die Zerstörung von organischen Abfallstoffen verwendet, bei einem sogenannten SCWO Prozess (= super critical water oxidation process). Der SCWO Prozess sowie verschiedene Reaktoren zu dessen Ausführung sind als solche bekannt, beispielsweise auch als sogenannter iSCWO Prozess und Reaktor. Der dort verwendete Reaktor ist in der Lage die organischen Bestandteile von Pestiziden, von Dioxinen, von Farben oder von Sprengstoffen zu zerstören. Für die Verwendung von überkritischem Wasser bei dem Oxidationsprozess wird im Oxidationsreaktor das Wasser zunächst bei einem Druck von wenigstens 221 bar auf eine Temperatur von über 374 °C gebracht. Unter diesen überkritischen Bedingungen nimmt das Wasser besondere Eigenschaften an, die für den Oxidationsprozess notwendig sind. Bevorzugte Prozesstemperaturen liegen zwischen 400 und 650 °C sowie bevorzugte Prozessdrücke liegen zwischen 225 und 250 bar.

Im Ausführungsbeispiel soll im Folgenden näher erläutert werden, wie eine überkritische Wasseroxidation für eine Behandlung von radioaktiv belasteten lonentauscherharzabfall erfindungsgemäß ausgestaltet ist. Dazu weist eine Luftzufuhrrichtung einen Kompressor 14 auf, der der Umgebung Luft entnimmt und verdichtet diese auf wenigstens ca. 225 bar. Die verdichtete Luft wird dann einem Luftvorwärmer 16 zugeführt, der den Luftstrom auf wenigstens 650°Celsius erwärmt Die so erwärmte Luft wird schließlich über eine Rohrleitung eingangsseitig dem Oxidationsreaktor 12 zugeleitet.

Aus einem ersten Vorratsbehälter 18 entnimmt eine erste Pumpvorrichtung 20 Dieselbrennstoff und pumpt den Diesel über eine Leitung in Richtung Oxidationsreaktor 12. Alternativ zu dem Dieselbrennstoff kommen auch andere Brennstoffe, wie beispielsweise Propangas, in Betracht.

Aus einem zweiten Vorratsbehälter 22 wird lonentauscherharzabfall, wobei das der lonentauscherharzabfall als lonentauscherharzpartikel vorliegt, deren Partikel typischerweise eine Partikelgröße von ca. 1 mm aufweisen, einem lonentauscherharzzerkleinerungssystem 24 zugeführt. Das lonentauscherharzzerkleinerungssystem 24 zerkleinert den lonentauscherharzabfall derart, dass bei einem überwiegenden Teil der lonentauscherharzpartikel eine vorgegebene Partikelgröße von 100µm, bevorzugt jedoch von 50 µm, unterschritten wird. Eine zweite Pumpvorrichtung 26 entnimmt dem lonentauscherharzzerkleinerungssystem 24 den verkleinerten lonentauscherharzabfall in Form einer Suspension in Wasser und leitet die Suspension der Leitung mit dem Dieselbrennstoff zu, in der sich der Dieselbrennstoff mit der Suspension vermischt.

Aus einer Wasserzuführeinrichtung 28, die zum Beispiel ein Wasserleitungsnetz oder ein Wasserbehälter sein kann, wird ein bestimmter Wasserstrom ebenfalls der Leitung mit dem Dieselbrennstoff zugeleitet, der sich dort mit dem Dieselbrennstoff sowie der Suspension vermischt. Ein anderer Wasserteilstrom mit einer dritten Pumpvorrichtung 30 zugeführt, die den Druck des Wasserteilstrom erhöht und dann dem Oxidationsreaktor 12 zuführt. Dieser Wasserteilstrom wird zu Kühlzwecken der Prozesse im Oxidationsreaktor 12 verwendet. Aus einem dritten Vorratsbehälter 32 wird mit einer vierten Pumpvorrichtung 34 bedarfsweise Natronlauge dem Wasserstrom in einer Menge zugegeben, die ausreicht, um die aus der Zersetzung des lonenaustauscherharzes entstehende Schwefelsäure zu neutralisieren.

Schließlich sorgt eine fünfte Pumpvorrichtung 36 dafür, dass die Mischung aus Dieselbrennstoff, Suspension und Wasser dem vorgenannten Luftstrom zugeführt wird und die so entstehende Stoffmischung dem Oxidationsreaktor 12 eingangsseitig eingeleitet wird. Der Oxidationsreaktor 12 selbst zerlegt nun durch den Prozess der überkritischen Wasseroxidation die organischen Bestandteile der Mischung, also insbesondere das Ionentauscherharz und gegebenenfalls organische Verunreinigungen in seine nicht-organischen Bestandteile. Im Ergebnis steht dann ausgangsseitig eine Vermischung von Gas, insbesondere Wasserdampf, Kohlendioxid (CO2) und gegebenenfalls Spuren von Schwefeloxiden (SOx) sowie Stickoxiden (NOx), Wasser sowie im Wasser gelöste Salze, also metallische und nicht metallische Ionen, zur weiteren Behandlung bereit. Am Ende des Prozesses der überkritischen Wasseroxidation wurden also alle organischen Bestandteile in nicht organische Bestandteile zerlegt, die mit weiteren Abfallbehandlungsmethoden und Abfallbehandlungssystemen für nicht-organischen Abfall weiter behandelbar sind. Auch die sonst bei anderen Verfahren, beispielsweise bei einem Verbrennungsverfahren von organischen Stoffen, in vergleichsweise großen Mengen anfallenden Gase, insbesondere Schwefeloxide (SOx) oder Stickoxide (NOx) fallen nicht bzw. nur in geringsten (Spuren-) Mengen an, sondern verbleiben in ionischer Form weitestgehend in der flüssigen Phase.

Eine Steuerungseinrichtung, die in der Figur jedoch nicht gezeigt ist, steuert beziehungsweise regelt alle relevanten Prozesse für die überkritische Wasseroxidation, also insbesondere die Zuführung von Luft, Dieselbrennstoff, lonentauscherharzabfall, Wasser und gegebenenfalls Natronlauge in Bezug auf alle relevanten physikalischen Parameter, beispielsweise Mengen- oder Volumenstrom, Druck oder Temperatur, so dass der Prozess der überkritischen Wasseroxidation in optimaler Weise abläuft. Die Prozesssteuerung als solche ist dem Fachmann bekannt und erfolgt aufgrund der Gegebenheiten im konkreten Anwendungsfall. Vorteilhafterweise wurde durch die Zerstörung der organischen molekularen Struktur des Ionentauscherharzes auch eine erhebliche Volumenreduktion des lonentauscherharzabfalles erreicht. Der vergleichsweise größte Teil am lonentauscherharzabfall ist nämlich das lonentauscherharz, während die am Ionentauscherharz anhaftenden Ionen, insbesondere auch die radioaktiven belasteten Ionen, nur einen vergleichsweise kleinen Teil des Abfallvolumens ausmachen. Gleichwohl sind in der Vermischung weiterhin die radioaktiven Stoffe vorhanden, deren Entsorgung besonderen, allgemein bekannten gesetzlichen Vorschriften und Normen unterliegt. Die Vermischung kann also beispielsweise einem Zementierungsprozess zugeführt werden oder einem Prozess, der zu einer weiteren Volumenreduktion der Vermischung führt, wie beispielhaft nachstehend näher erläutert wird.

Auch ausgangsseitig am Oxidationsreaktor 12 steht die Vermischung noch unter einem Druck der höher ist als Umgebungsdruck. Die Vermischung wird sodann einer Separatorvorrichtung 38 zugeführt, die die gasförmigen Anteile aus der Vermischung von den flüssigen Anteilen trennt und die Anteile jeweils an einem Gasauslasselement beziehungsweise an einem Flüssigkeitsauslasselement bereitstellt.

Das separierte Gas ist ganz überwiegend Kohlendioxid und Wasserdampf, das vom Gasauslasselement mit einer Rohrleitung zu einem ersten Kondensator 40 geleitet wird, der dem Gasstrom den Wasserdampf entzieht und diesen derart trocknet. Das getrocknete gasförmige Kohlendioxid weist keine radioaktiven Bestandteile auf und wird daher über ein Lüftungselement 44 an die Umgebung abgegeben. Das kondensierte Wasser wird zu einem Kondensatbehälter 42 geleitet und dort gesammelt.

Das Flüssigkeitsauslasselement ist an einer geodätisch tief gelegenen Stelle der Separatorvorrichtung 38 angeordnet. Ein Teil des flüssigen Anteils der Vermischung wird von dort mit einer sechsten Pumpvorrichtung 46 zu einer Verdampfervorrichtung 48 geleitet, in der der Wasseranteil an der Vermischung verdampft wird. Dabei wird der Wasserdampf in einen zweiten Kondensator 50 geleitet, der den Wasserdampf wiederum zu flüssigem Wasser kondensiert, das ebenfalls in den Kondensatbehälter 42 abgeleitet und dort gesammelt wird. Ein Reststrom nach dem Durchlaufen der Verdampfervorrichtung 48 wird einer Fasstrocknungseinrichtung 52 zugeleitet. Dort mit dem Reststrom der verbliebene Wasseranteil entzogen, beispielsweise in einer Fasstrocknungseinrichtung 52, die einen 200 Liter Fassbehälter oder einen anderen für die Ein- beziehungsweise Endlagerung geeigneten Behälter aufweist und einen Unterdruck für den Wasserentzug benutzt, der durch einen Wasserringkompressor erzeugt wird. Der Fassbehälter weist dabei eine elektrische Heizung in seinem Boden- und Mandelbereich auf. Alternativ zu der vorstehenden elektrischen Heizung kann die Wärmezufuhr zum Fassbehälter auch durch eine beheizte Kammer erfolgen, in die der Fassbehälter hineingestellt und durch entsprechend vorgeheizte Luft beaufschlagt wird.

Ein anderer Teil des flüssigen Anteils der Vermischung wird unmittelbar zu der Fasstrocknungseinrichtung 52 geleitet, wobei dort ebenfalls dem flüssigen Anteil dort ebenfalls das Wasser entzogen wird. In der Fasstrocknungseinrichtung 52 verbleiben also insgesamt lediglich die Residuen, also die Salze und sonstige Feststoffanteile, die allein radioaktiv sind. Diese Residuen haben ein noch kleineres Volumen als die Vermischung die bereits ein reduziertes Volumen im Vergleich zum Ausgangsstoff, nämlich den lonentauscherharzabfall hatte. Insgesamt ist also das radioaktive Abfallvolumen durch das lonentauscherharzbehandlungssystem 10 in vorteilhafter Weise reduziert.

Das im Kondensatbehälter 42 gesammelte Wasser kann mittels einer entsprechenden Ablaufvorrichtung 54 wahlweise entweder - ggf. nach einer weiterer Aufbereitung - an die Umgebung abgegeben oder mit einer Transferleitung der Wasserzuführeinrichtung 28 zugeleitet werden.

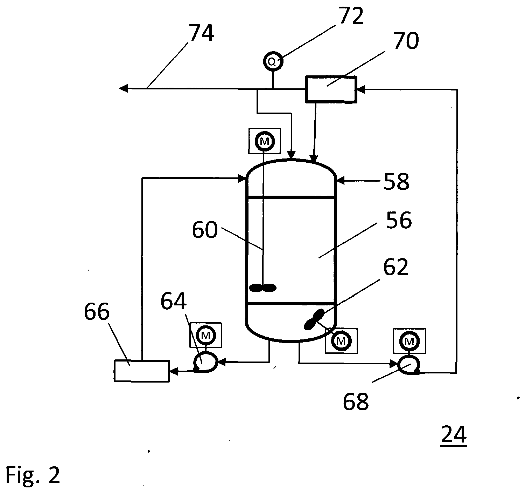

Fig. 2 zeigt eine schematische Darstellung für eine vorteilhafte Ausgestaltung des lonentauscherharzzerkleinerungssystems 24 mit einem Behälter 56 in den über eine Zuführvorrichtung 58 eine vorgegebene Menge an Abfallsuspension aus lonentauscherharzabfall und Wasser eingebracht wird. Der Behälter 56 weist eine Harzkonzentrationsüberwachungsvorrichtung sowie eine Füllstandsmessung für einen Füllstand der Abfallsuspension auf, die aus Vereinfachungsgründen in dem Schema nicht dargestellt sind. Nach dem Befüllen des Behälters 56 mit der vorgegebenen Menge an Abfallsuspension und einer Überprüfung des Füllstandes im Behälter 56, wird eine erste Rührvorrichtung 60 gestartet, die einen Rührer bewegt, der in einem Bereich im Behälter 56 angeordnet ist, der während des Betriebes des lonentauscherharzzerkleinerungssystem 24 mit Suspension bedeckt ist. Der Behälter 56 ist dabei drucklos, steht also lediglich unter Umgebungsdruck, und weist die Umgebungstemperatur auf. Der Rührer hat die Aufgabe, die Abfallsuspension derart in Bewegung zu versetzen, dass eine Homogenisierung der Feststoffe in der Suspension erfolgt. Zudem weist der Behälter 56 noch eine zweite Rührvorrichtung 62 auf, die im - in geodätischer Richtung gesehen - unteren Drittel des Behälters 56 angeordnet ist. Die zweite Rührvorrichtung 62 ist als Vormahlwerk oder Vorzerkleinerungsvorrichtung ausgestaltet und wird zusammen mit der ersten Rührvorrichtung 60 gestartet. Die zweite Rührvorrichtung 62 unterstützt zum einen den Homogenisierungsprozess, zum anderen werden die lonentauscherharzpartikel teilweise bereits zerkleinert oder aneinander haftende lonentauscherharzpartikel wieder voneinander getrennt.

Ist auf die vorstehend genannte Weise eine ausreichende Homogenisierung der Abfallsuspension erreicht, wird dem Behälter 56 mit einer Zirkulationspumpe 64 ein kontinuierlicher Strom an Abfallsuspension entnommen und eine lonentauscherharzzerkleinerungsvorrichtung 66 zugeführt. Diese kann beispielsweise so ausgestaltet sein wie die Ionenaustauscherharzzerkleinerungsvorrichtung, die durch die deutsche Patentanmeldung DE 102012012828 A1 bekannt geworden ist, also insbesondere zweistufig ausgeführt sein mit einer Vorzerkleinerungseinrichtung, beispielsweise als Dispergierer ausgestaltet, und einer Kolloidmühle, deren Rotor- beziehungsweise Statorkranz auch konisch ausgeführt sein kann. Nach einem Durchlaufen der Ionentauscherharzzerkleinerungsvorrichtung 66 wird die Abfallsuspension durch eine Leitung zurück in den Behälter 56 geleitet.

Nach einer vorgegebenen Zeitspanne nachdem die erste 60 sowie die zweite Rührvorrichtung 62 in Betrieb gesetzt wurden, wird auch eine Entnahmepumpe 68 in Betrieb gesetzt. Dabei ist die vorgegebene Zeitspanne ist zum Beispiel empirisch ermittelt und so bemessen, dass erwartet werden kann, dass die lonentauscherharzzerkleinerungsvorrichtung 66 bereits wenigstens 70 Prozent der lonentauscherharzpartikel im lonentauscherharzzerkleinerungssystem 24 bereits auf die gewünschte Partikelgröße - im gewählten Beispiel also eine Partikelgröße die kleiner ist als 100 µm - zermahlen beziehungsweise zerkleinert wurden. Die Entnahmepumpe 68 fördert dabei die Suspension aus zerkleinerten lonentauscherharzpartikel, Wasser und den darin gelösten Salzen beziehungsweise Ionen zu einer Klassifikationsvorrichtung 70, welche so ausgestaltet ist, dass sie zu große lonentauscherharzpartikel, also solche Partikel die größer als die 100µm sind, zurückhält und über eine entsprechende Leitung in den Behälter 56 zurückführt. Im Behälter 56 sind weiterhin die erste 60 sowie die zweite Rührvorrichtung 62 in Betrieb. Außerdem zerkleinert die lonentauscherharzzerkleinerungsvorrichtung 66 weiterhin die in der Suspension enthaltenen Ionentauscherharzpartikel. Durch das Zusammenwirken des lonentauscherharzzerkleinerungssystem 24 und der Klassifizierungsvorrichtung 70 ist vorteilhafterweise der kontinuierliche Betrieb des lonentauscherharzbehandlungssystems 10 ermöglicht. Sobald beispielsweise dem lonentauscherharzbehandlungssystem 10 so viel Suspension entnommen wurde, dass ein bestimmter Füllstand im Behälter 56 unterschritten wird, kann einfach weiterer lonentauscherharzabfall über die Zufuhreinrichtung 58 in den Behälter 56 gegeben werden, und der kontinuierliche Prozess des Zerkleinern der lonentauscherharzpartikel sowie der kontinuierlichen Entnahme durch die Entnahmepumpe 68 wird fortgeführt. So ist ein sonst erforderliches, sich wiederholendes An- und Abfahren des lonentauscherharzbehandlungssystems 10 in vorteilhafterweise vermieden. Auch der damit verbundene zusätzliche Energieaufwand entfällt. Zudem ist auch die Wechselbeanspruchung des Materials der lonentauscherharzbehandlungssystems 10 durch den Wechsel von Umgebungsbedingungen zu hohen Betriebsdrücken und -temperaturen beim An- und Abfahren vermieden.

Die Klassifikationsvorrichtung 70 kann dabei besonders vorteilhaft als Zentrifuge, zum Beispiel als Dekanterzentrifuge, ausgeschaltet sein, welche die zu großen lonentauscherharzpartikel abscheidet oder beispielsweise auch als Zyklonwäscher, der ebenfalls die zu großen lonentauscherharzpartikel aus der Suspension entfernt. Nach dem Durchströmen der Klassifikationsvorrichtung 70 enthält die dann klassifizierte Suspension vor allem lonentauscherharzpartikel, die die gewünschte Partikelgröße unterschreiten, wobei diese klassifizierte Suspension dann einer Konzentrationsmeßvorrichtung 72 zugeleitet wird, die bevorzugt als Dichtemessvorrichtung oder beispielsweise auch als Trübungsmessvorrichtung ausgestaltet sein kann. Die Konzentrationsmeßvorrichtung 72 kann dabei als eine Art Endkontrolle der klassifizierten Suspension betrachtet werden, deren Aufgabe es ist, zu bestimmen, wie hoch der Anteil an lonentauscherharzpartikel in der Suspension ist.

Ist der durch die Konzentrationsmeßvorrichtung 72 gemessene Anteil an lonentauscherharzpartikel in der Suspension wenigstens gleich groß als ein vorgegebener Anteilswert, beispielsweise 30 Prozent, wird der Prozess der überkritischen Wasseroxidation gestartet und die Suspension dem Prozess zugeführt. Überschreitet der gemessene Anteil den vorgegebenen Anteilswert ist es vorgesehen, der Suspension gegebenenfalls Wasser zuzuführen, um den vorgegebenen Wert zu erreichen. In der Regel mit der vorgegebene Anteilswert kein Einzelwert sein, sondern eine Wertspanne, beispielsweise von 30 Prozent bis 35 Prozent Anteilswert.

Falls es für den Betrieb des lonentauscherharzzerkleinerungssystems erforderlich ist, kann die Suspension, die an der Konzentrationsmeßvorrichtung 72 ansteht, über eine entsprechende Leitung wieder zurück in den Behälter 56 geleitet werden. Dort wird die Suspension wiederum über den Zerkleinerungskreislauf, also über die Zirkulationspumpe 64 zu der lonentauscherharzzerkleinerungsvorrichtung 66 gefördert, die die lonentauscherharzpartikel weiter zerkleinert bis beispielsweise der Anteil an der Konzentrationsmeßvorrichtung 72 den vorgegebenen Anteilswert wenigstens erreicht. Wie bereits erwähnt, wird - sobald der vorgegebene Anteilswert erreicht ist - . der Prozess der überkritischen Wachswasseroxidation beziehungsweise das entsprechende lonentauscherharzbehandlungssystem dafür gestartet und über eine Zuführleitung 74 die Suspension mit dem ausreichend zerkleinerten lonentauscherharz und einer entsprechend hohen Konzentration in der klassifizierten Suspension zu einer Saugseite der zweiten Pumpvorrichtung 26 verbracht.

Es sei noch darauf hingewiesen, dass bei der schematischen Darstellung in dieser Figur auf jegliche notwendigen Ventile oder Messstellen verzichtet wurde, um die Darstellung wird es einfach zu halten. Allerdings ist es dem Fachmann geläufig und innerhalb seines fachmännischen Könnens diese bedarfsgemäß zu ergänzen. Zudem werden alle Vorgänge und Prozesse durch eine Steuerungseinrichtung gesteuert, die ebenfalls in der Darstellung nicht gezeigt ist. Die Steuerungseinrichtung kann auch das Steuerungssystem der überkritischen Wasseroxidation sein beziehungsweise als Teil des Steuerungssystems für das lonentauscherharzbehandlungssystem sein.

### Bezugszeichenliste

- 10: lonentauscherharzbehandlungssystem
- 12: Oxidationsreaktor
- 14: Kompressor
- 16: Luftvorwärmer
- 18: erster Vorratsbehälter
- 20: erste Pumpvorrichtung
- 22: zweiter Vorratsbehälter
- 24: Ionentauscherharzzerkleinerungssystem
- 26: zweite Pumpvorrichtung
- 28: Wasserzuführeinrichtung
- 30: dritte Pumpvorrichtung
- 32: dritter Vorratsbehälter
- 34: vierte Pumpvorrichtung
- 36: fünfte Pumpvorrichtung
- 38: Separatorvorrichtung
- 40: erster Kondensator
- 42: Kondensatbehälter
- 44: Lüftungselement
- 46: sechste Pumpvorrichtung
- 48: Verdampfervorrichtung
- 50: zweiter Kondensator
- 52: Fasstrocknungseinrichtung
- 54: Ablaufvorrichtung
- 56: Behälter
- 58: Zuführvorrichtung
- 60: erste Rührvorrichtung
- 62: zweite Rührvorrichtung
- 64: Zirkulationspumpe
- 66: lonentauscherharzzerkleinerungsvorrichtung
- 68: Entnahmepumpe
- 70: Klassifikationsvorrichtung
- 72: Konzentrationsmeßvorrichtung
- 74: Zuführleitung

## Patentansprüche

1. lonentauscherharzbehandlungssystem (10) zur Behandlung von radioaktiv belastetem lonentauscherharzabfall, wobei ein Überkritischeswasseroxidationsreaktor (12) eingangsseitig mit einer Luftzufuhreinrichtung, mit einer Abfallzuführeinrichtung, mit einer Brennstoffzuführeinrichtung und einer Wasserzuführeinrichtung (28) verbunden ist, wobei der Abfallzuführeinrichtung eine lonentauscherharzzerkleinerungssystem (24) vorgeschaltet ist, das ein zu behandelndes lonentauscherharz so lange zerkleinert bis eine vorgegebene lonentauscherharzpartikelgröße des zu zerkleinernden Ionentauscherharzes unterschritten ist, wobei das zerkleinerte Ionentauscherharz der Abfallzuführeinrichtung zugeführt ist, wobei der Überkritischeswasseroxidationsreaktor (12) ausgangsseitig mit einer Separatorvorrichtung (38) verbunden ist, wobei durch die Separatorvorrichtung (38) die vom Überkritischeswasseroxidationsreaktor (12) erhaltene Mischung aus Gas und Flüssigkeit in die jeweilige Phase getrennt ist und ein abgeschiedenes Gas einem Gasauslasselement und eine abgeschiedene Flüssigkeit an einem Flüssigkeitsauslasselement bereitgestellt ist, und wobei durch eine Steuerungseinrichtung wenigstens der Überkritischeswasseroxidationsreaktor (12), die Luftzufuhreinrichtung, die Abfallzuführeinrichtung, die Brennstoffzuführeinrichtung und die Wasserzuführeinrichtung geregelt ist,
**dadurch gekennzeichnet, dass**
das lonentauscherharzzerkleinerungssystem (24) einen Behälter (56) aufweist, aus dem mit einer Zirkulationspumpe (64) eine Suspension aus Flüssigkeit und lonentauscherharz entnommen und einer lonentauscherharzzerkleinerungsvorrichtung (66) zugeführt ist, und dass durch eine Leitung die Suspension aus zerkleinertem Ionentauscherharz und der Flüssigkeit zurück in den Behälter (56) gefördert ist dass durch eine Entnahmepumpe (68) die Suspension dem Behälter (56) entnommen ist und einer Klassifikationsvorrichtung (70) zugeführt ist, dass durch die Klassifikationsvorrichtung (70) Ionentauscherharz, das die vorgegebene lonentauscherharzpartikelgröße überschreitet, aus der Suspension ausgeschieden ist, dass wenigstens die ausgeschiedenen lonentauscherharzpartikel zurück in den Behälter (56) geführt sind, und dass Ionentauscherharz, das gleich groß oder kleiner ist als die vorgegebene lonentauscherharzpartikelgröße, in einem verbleibenden Flüssigkeitsanteil als klassifizierte Suspension an einem Ausgangselement an der Klassifikationsvorrichtung (70) bereitgestellt ist, dass die durch die Klassifikationsvorrichtung (70) bereitgestellte klassifizierte Suspension einer Konzentrationsmessvorrichtung (72) zugeführt ist, dass durch die Konzentrationsmessvorrichtung (72) ein Konzentrationswert an lonentauscherharzpartikel in der Suspension bestimmt ist, dass die klassifizierte Suspension erst bei einem Erreichen oder bei einem Überschreiten des bestimmten Konzentrationswerts im Vergleich zu einem festgelegen Konzentrationswert die klassifizierte Suspension zur Abnahme durch eine zweite Pumpvorrichtung (26) bereitgestellt ist, und dass bei einem Unterschreiten des festgelegten Konzentrationswertes die klassifizierte Suspension zurück in den Behälter (56) geleitet ist.

2. lonentauscherharzbehandlungssystem (10) nach Anspruch 1, **dadurch gekennzeichnet, dass** die Konzentrationsmessvorrichtung (72) eine Dichtemessvorrichtung oder eine Trübungsmessvorrichtung ist.

3. lonentauscherharzbehandlungssystem (10) nach Anspruch 1 oder 2, **dadurch gekennzeichnet, dass** durch die Steuerungseinrichtung auch eine lonentauscherharzzerkleinerungsvorrichtung (66) gesteuert ist.

4. lonentauscherharzbehandlungssystem (10) nach einem der vorherigen Ansprüche, **dadurch gekennzeichnet, dass** in einem dritten Vorratsbehälter (32) Natronlauge gelagert ist, und dass mit einer vierten Pumpvorrichtung (34) bedarfsweise Natronlauge von dem dritten Vorratsbehälter (32) in die Wasserzuführeinrichtung (28) eingeleitet wird.

5. lonentauscherharzbehandlungssystem (10) nach einem der vorherigen Ansprüche, **dadurch gekennzeichnet, dass** das abgeschiedenes Gas vom Gasauslasselement einem ersten Kondensator (40) zugeführt ist, und dass die abgeschiedene Flüssigkeit vom Flüssigkeitsauslasselement, abhängig von den Inhaltsstoffen der abgeschiedenen Flüssigkeit entweder einem Verdampfervorrichtung (48) und anschließend ein Wasserdampf von der Verdampfervorrichtung (48) einem zweiten Kondensator (50) oder einer Fasstrocknungseinrichtung (52) zugeführt ist.

6. Ionentauscherharzbehandlungssystem (10) nach Anspruch 5, **dadurch gekennzeichnet, dass** ein Wasserkondensat vom ersten Kondensator (40) und ein kondensiertes Wasser vom zweiten Kondensator (50) einem Kondensatbehälter (42) zugeführt ist.

7. lonentauscherharzbehandlungssystem (10) nach Anspruch 6, **dadurch gekennzeichnet, dass** Wasser aus dem Kondensatbehälter (42) bedarfsweise der Wasserzuführeinrichtung (28) zugeleitet ist.

8. lonentauscherharzbehandlungssystem (10) nach einem der vorherigen Ansprüche 7 bis 10, **dadurch gekennzeichnet, dass** der Behälter (56) eine erste Rührvorrichtung (60), aufweist, die ein Rührelement aufweist, durch das die Verteilung der lonentauscherharzpartikel in der Flüssigkeit im Behälter (56) homogenisiert ist.

9. lonentauscherharzbehandlungssystem (10) nach einem der vorherigen Ansprüche 7 bis 11, **dadurch gekennzeichnet, dass** der Behälter (56) eine zweite Rührvorrichtung (62) aufweist, die ein Zerkleinerungsrührelement aufweist, durch das die Ionentauscherharzpartikel in der Flüssigkeit im Behälter (56) zerkleinerbar sind.

10. Verfahren zur Behandlung von radioaktiv belastetem Ionentauscherharz, umfassend folgende Schritte:
• Zerkleinern von radioaktiv belastetem lonentauscherharz bis eine vorgegebene lonentauscherharzpartikelgröße in einer Suspension aus Flüssigkeit und lonentauscherharz in einem Behälter (56) unterschritten und als klassifizierte Suspension bereitgestellt wird,
• Entnahme eines weiteren Teilstromes an klassifizierter Suspension und Überwachen eines Konzentrationswertes an lonentauscherharzpartikel im weiteren Teilstrom
• Breitstellen der klassifizierten Suspension erst bei einem Erreichen oder bei einem Überschreiten des bestimmten Konzentrationswerts im Vergleich zu einem festgelegen Konzentrationswert für die Abnahme durch eine zweite Pumpvorrichtung (26), wobei bei einem Unterschreiten des bestimmten Konzentrationswerts im Vergleich zu dem festgelegen Konzentrationswert die klassifizierte Suspension zurück in den Behälter (56) geleitet wird,
• Zuführen von Luft sowie einer Suspension aus Brennstoff, Wasser und zerkleinertem lonentauscherharz als klassifizierte Suspension mit wenigstens einem bestimmten Konzentrationswert in einen Überkritischeswasseroxidationsreaktor (12),
• Regelung jeder dem Überkritischeswasseroxidationsreaktor (12) zugeführten Menge an Luft, an Brennstoff, an Wasser und an zerkleinertem lonentauscherharz, so dass durch den Überkritischeswasseroxidationsreaktor (12) alle organischen Anteile in der Suspension in eine Mischung aus Gas, das Kohlendioxid und Wasserdampf aufweist, und Flüssigkeit, das Wasser und gelöste oder freie nichtorganische Ionen aufweist, aufgespalten werden,
• Abscheiden von Gas aus der Mischung.

11. Verfahren nach Anspruch 10, **dadurch gekennzeichnet, dass** Natronlauge bedarfsweise dem Wasser eingeleitet wird, bevor das Wasser dem Überkritischeswasseroxidationsreaktor (12) zugeführt wird.

12. Verfahren nach Anspruch 10 oder 11, **dadurch gekennzeichnet, dass** das abgeschiedene Gas in einem ersten Kondensator (40) getrocknet und anschließend in die Umgebung abgegeben wird.

13. Verfahren nach einem der Ansprüche 10 bis 12, **dadurch gekennzeichnet, dass** die Flüssigkeit aufgrund ihre Inhaltsstoffe hin entweder einer Verdampfervorrichtung (48) zugeleitet wird, durch die vorhandenes Wasser in der Flüssigkeit verdampft wird und verbleibende feuchte Residuen einer Fasstrocknungseinrichtung (52) zugeführt werden, wobei anschließend der Wasserdampf in einem zweiten Kondensator (50) zu Wasser kondensiert wird, oder die Flüssigkeit unmittelbar einer Fasstrocknungseinrichtung (52) zugeführt wird, in der vorhandene Wasseranteile der Flüssigkeit so lange entzogen werden, bis Residuen verbleiben.

14. Verfahren nach einem der Ansprüche 10 bis 13, **dadurch gekennzeichnet, dass** Wasser aus dem ersten oder/und aus dem zweiten Kondensator (50) zu einem Kondensatbehälter (42) geleitet wird, und dass ein im Kondensatbehälter (42) gesammeltes Wasser wahlweise in ein Abwasseraufbereitungssystem oder zu der Wasserzuführeinrichtung (28) geleitet wird.

15. Verfahren nach einem der Ansprüche 10 bis 14, **dadurch gekennzeichnet, dass** eine im Behälter (56) befindliche Suspension aus Wasser und lonentauscherharzpartikeln mit einer ersten Rührvorrichtung (60) homogenisiert wird.

16. Verfahren nach Anspruch 15, **dadurch gekennzeichnet, dass** das im Behälter (56) befindliche Ionentauscherharz in der Suspension durch eine zweite Rührvorrichtung (62) vorzerkleinert wird.

17. Verfahren nach einem der Ansprüche 15 oder 16, **dadurch gekennzeichnet, dass** die im Behälter (56) befindliche homogenisierte Suspension mit einer Zirkulationspumpe (64) zu der lonentauscherharzzerkleinerungsvorrichtung (66) gefördert wird, dass die lonentauscherharzpartikel in der Suspension in der lonentauscherharzzerkleinerungsvorrichtung (66) zerkleinert werden, und dass die lonentauscherharzpartikel nach einem Durchlaufen der lonentauscherharzzerkleinerungsvorrichtung (66) als zerkleinertes lonentauscherharzpartikel in der Suspension zurück in den Behälter (56) gefördert werden.

18. Verfahren nach Anspruch 17, **dadurch gekennzeichnet, dass** die Suspension eine vorgegebene Zeitspanne von dem Behälter (56) zu der lonentauscherharzzerkleinerungsvorrichtung (66) gefördert wird und dort die lonentauscherharzpartikel zerkleinert werden, bevor eine Entnahmepumpe (68) aktiviert wird, die einen Teilstrom der Suspension aus dem Behälter (56) einer Klassifikationsvorrichtung (70) zuführt, dass durch die Klassifikationsvorrichtung (70) solche lonentauscherharzpartikel aus der Suspension separiert werden, die die festgelegte lonentauscherharzpartikelgröße überschreiten, und dass die separierten lonentauscherharzpartikel zusammen mit einem Teil der Suspension zurück in den Behälter (56) geleitet werden, und dass eine restliche Suspension mit lonentauscherharzpartikeln, die gleich groß oder kleiner sind als die festgelegte lonentauscherharzpartikelgröße, an einem Ausgangselement an der Klassifikationsvorrichtung (70) bereitgestellt ist.

19. Verfahren nach Anspruch 18, **dadurch gekennzeichnet, dass** die restliche Suspension von dem Ausgangselement an der Klassifikationsvorrichtung (70) zu einer Konzentrationsmeßvorrichtung (72) geleitet wird, dass durch die Konzentrationsmeßvorrichtung (72) ein Anteil an lonentauscherharzpartikeln in der Suspension bestimmt wird, die größer sind als ein festgelegter Wert für die lonentauscherharzpartikelgröße, dass bei einem Erreichen oder bei einem Überschreiten des festgelegen Wertes für den Anteil die Suspension zurück in den Behälter (56) geleitet wird, und dass bei einem Unterschreiten des festgelegten Wertes für den Anteil die Suspension zur Abnahme durch eine zweite Pumpvorrichtung (26) bereitgestellt wird.

## Claims

1. Ion exchange resin treatment system (10) for treating radioactive ion exchange resin waste, wherein a supercritical water oxidation reactor (12) is connected on the inlet side with an air supply device, with a waste supply device, with a fuel supply device and a water supply device (28), wherein an ion exchange resin comminution system (24) is connected upstream of the waste supply device and comminutes an ion exchange resin for treatment until the particle size of the ion exchange resin to be comminuted is below a predetermined ion exchange resin particle size, wherein the comminuted ion exchange resin is supplied to the waste supply device, wherein the supercritical water oxidation reactor (12) is connected on the output side with a separator apparatus (38), wherein the mixture of gas and liquid obtained from the supercritical water oxidation reactor (12) is separated into the respective phase by the separator apparatus (38) and a separated gas is provided at a gas outlet element and a separated liquid is provided at a liquid outlet element, and wherein at least the supercritical water oxidation reactor (12), the air supply device, the waste supply device, the fuel supply device and the water supply device are regulated by a control device,
**characterized in that**
the ion exchange resin comminution system (24) has a container (56) from which a suspension of liquid and ion exchange resin is removed with a circulation pump (64) and supplied to an ion exchange resin comminution apparatus (66), and **in that** the suspension of comminuted ion exchange resin and the liquid is conveyed back into the container (56) through a conduit,
**in that** the suspension is removed from the container (56) by means of a removal pump (68) and is supplied to a classification apparatus (70), **in that** the classification apparatus (70) eliminates ion exchange resin which exceeds the specified ion exchange resin particle size from the suspension, **in that** at least the eliminated ion exchange resin particles are fed back into the container (56), and **in that** ion exchange resin which is equal to or smaller than the specified ion exchange resin particle size in a remaining liquid fraction is provided as a classified suspension at an exit element at the classification apparatus (70), **in that** the classified suspension provided by the classification apparatus (70) is supplied to a concentration measuring apparatus (72), **in that** a concentration value of ion exchange resin particles in the suspension is determined by the concentration measuring apparatus (72), **in that** the classified suspension is provided for acceptance by a second pumping apparatus (26) only when the concentration value determined is reached or exceeded in comparison to a stipulated concentration value, and **in that** if the concentration value is below the stipulated value, the classified suspension is passed back into the container (56).

2. Ion exchange resin treatment system (10) according to Claim 1, **characterized in that** the concentration measuring apparatus (72) is a density measuring device or a turbidity measuring device.

3. Ion exchange resin treatment system (10) according to Claim 1 or 2, **characterized in that** an ion exchange resin comminution apparatus (66) is also controlled by the control device.

4. Ion exchange resin treatment system (10) according to any of the preceding claims, **characterized in that** sodium hydroxide is stored in a third reservoir (32), and **in that** with a fourth pumping apparatus (34), as and when required, sodium hydroxide is introduced from the third reservoir (32) into the water supply device (28).

5. Ion exchange resin treatment system (10) according to any of the preceding claims, **characterized in that** the separated gas is supplied from the gas outlet element to a first condenser (40), and **in that** the separated liquid is supplied from the liquid outlet element, depending on the ingredients of the separated liquid, either to an evaporator apparatus (48) and then a water vapour from the evaporator apparatus (48) to a second condenser (50), or to a drum drying device (52).

6. Ion exchange resin treatment system (10) according to Claim 5, **characterized in that** a water condensate is supplied from the first condenser (40) and a condensed water from the second condenser (50) to a condensate container (42).

7. Ion exchange resin treatment system (10) according to Claim 6, **characterized in that** water from the condensate container (42) is supplied as and when required to the water supply device (28).

8. Ion exchange resin treatment system (10) according to any of the preceding Claims 7 to 10, **characterized in that** the container (56) has a first stirring apparatus (60), which has a stirring element by which the distribution of the ion exchange resin particles in the liquid in the container (56) is homogenized.

9. Ion exchange resin treatment system (10) according to any of the preceding Claims 7 to 11, **characterized in that** the container (56) has a second stirring apparatus (62), which has a comminuting stirring element by which the ion exchange resin particles in the liquid in the container (56) can be comminuted.

10. Method for treating radioactive ion exchange resin, comprising the following steps:
• comminuting radioactive ion exchange resin until the ion exchange resin particle size in a suspension of liquid and ion exchange resin in a container (56) is below a specified ion exchange resin particle size and provided as a classified suspension,
• removing a further substream of classified suspension and monitoring a concentration value of ion exchange resin particles in the further substream,
• providing the classified suspension only when the concentration value determined is reached or exceeded in comparison with a stipulated concentration value for acceptance by a second pumping apparatus (26), where, if the concentration value determined is below in comparison to the stipulated concentration value, the classified suspension is passed back into the container (56),
• supplying air and a suspension of fuel, water and comminuted ion exchange resin as a classified suspension having at least a determined concentration value into a supercritical water oxidation reactor (12),
• regulating each amount of air, fuel, water and comminuted ion exchange resin supplied to the supercritical water oxidation reactor (12), so that, through the supercritical water oxidation reactor (12), all organic components in the suspension are split into a mixture of gas, containing carbon dioxide and water vapour, and liquid, containing water and dissolved or free non-organic ions,
• separating gas from the mixture.

11. Method according to Claim 10, **characterized in that** sodium hydroxide is introduced as and when required to the water before the water is supplied to the supercritical water oxidation reactor (12).

12. Method according to Claim 10 or 11, **characterized in that** the separated gas is dried in a first condenser (40) and then discharged into the environment.

13. Method according to any of Claims 10 to 12, **characterized in that** on the basis of its ingredients, either the liquid is supplied to an evaporator apparatus (48), by which existing water in the liquid is evaporated and remaining wet residuals are supplied to a drum drying device (52), wherein the water vapour is then condensed in a second condenser (50) to give water, or the liquid is supplied directly to a drum drying device (52), in which existing water components are withdrawn from the liquid until residuals remain.

14. Method according to any of Claims 10 to 13, **characterized in that** water from the first and/or from the second condenser (50) is passed to a condensate container (42), and **in that** a water collected in the condensate container (42) is passed alternatively into a wastewater treatment system or to the water supply device (28).

15. Method according to any of Claims 10 to 14, **characterized in that** a suspension of water and ion exchange resin particles located in the container (56) is homogenized with a first stirring apparatus (60).

16. Method according to Claim 15, **characterized in that** the ion exchange resin in the suspension located in the container (56) is precomminuted by a second stirring apparatus (62).

17. Method according to either of Claims 15 and 16, **characterized in that** the homogenized suspension located in the container (56) is conveyed by a circulation pump (64) to the ion exchange resin comminution apparatus (66), **in that** the ion exchange resin particles in the suspension are comminuted in the ion exchange resin comminution apparatus (66), and **in that** the ion exchange resin particles after passing through the ion exchange resin comminution apparatus (66) are conveyed back into the container (56) as comminuted ion exchange resin particles in the suspension.

18. Method according to Claim 17, **characterized in that** the suspension is conveyed for a specified period of time from the container (56) to the ion exchange resin comminution apparatus (66) and there the ion exchange resin particles are comminuted, before a removal pump (68) is activated which supplies a substream of the suspension from the container (56) to a classification apparatus (70), **in that** the classification apparatus (70) separates such ion exchange resin particles which exceed the stipulated ion exchange resin particle size from the suspension, and **in that** the separated ion exchange resin particles are passed together with a portion of the suspension back into the container (56), and **in that** a residual suspension with ion exchange resin particles equal to or smaller than the stipulated ion exchange resin particle size is provided at an exit element on the classification apparatus (70).

19. Method according to Claim 18, **characterized in that** the remaining suspension is passed from the exit element on the classification apparatus (70) to a concentration measuring apparatus (72), **in that** the concentration measuring apparatus (72) determines a proportion of ion exchange resin particles in the suspension which are larger than a stipulated value for the ion exchange resin particle size, **in that** when the stipulated value for the proportion is reached or exceeded, the suspension is passed back into the container (56), and **in that** when the value for the proportion is below the stipulated value, the suspension is provided for acceptance by a second pumping apparatus (26).

## Revendications

1. Système de traitement (10) de résine échangeuse d'ions destiné au traitement de déchets de résine échangeuse d'ions contaminés par de la radioactivité, dans lequel un réacteur d'oxydation (12) à eau supercritique est relié du côté entrée à un dispositif d'alimentation en air, à un dispositif d'alimentation en déchets, à un dispositif d'alimentation en combustible et à un dispositif d'alimentation en eau (28), en amont du dispositif d'alimentation en déchets étant placé un système de fragmentation (24) de résine échangeuse d'ions, qui fragmente une résine échangeuse d'ions à traiter, jusqu'à ce que la taille de particule de résine échangeuse d'ions à fragmenter soit inférieure à une taille préétablie de particule de résine échangeuse d'ions, dans lequel la résine échangeuse d'ions fragmentée est envoyée au dispositif d'alimentation en déchets, dans lequel le réacteur d'oxydation (12) à eau supercritique est relié du côté sortie à un dispositif séparateur (38), dans lequel le mélange de gaz et de liquide obtenu à partir du réacteur d'oxydation (12) à eau supercritique par le dispositif séparateur (38) est séparé en la phase respective et un gaz séparé est fourni à un élément d'évacuation de gaz et un liquide séparé est fourni à un élément d'évacuation de liquide, et dans lequel au moins le réacteur d'oxydation (12) à eau supercritique, le dispositif d'alimentation en air, le dispositif d'alimentation en déchets, le dispositif d'alimentation en combustible et le dispositif d'alimentation en eau sont régulés par un dispositif de commande,
**caractérisé en ce que**
le système de fragmentation (24) de résine échangeuse d'ions comporte un récipient (56) duquel une suspension de liquide et de résine échangeuse d'ions est prélevée au moyen d'une pompe de circulation (64) et est envoyée à un dispositif de fragmentation (66) de résine échangeuse d'ions, et **en ce que** la suspension de résine échangeuse d'ions fragmentée et du liquide est renvoyée dans le récipient (56) par une conduite
**en ce que** la suspension est prélevée du récipient (56) par une pompe de prélèvement (68) et est envoyée à un dispositif de classification (70), **en ce que**, par le dispositif de classification (70), de la résine échangeuse d'ions qui excède la taille préétablie de particule de résine échangeuse d'ions est séparée de la suspension, **en ce qu'**au moins les particules de résine échangeuse d'ions séparées sont renvoyées dans le récipient (56), et **en ce que** la résine échangeuse d'ions dont la taille est égale ou inférieure à la taille préétablie de particules de résine échangeuse d'ions est fournie dans une quantité de liquide restante, en tant que suspension classée, à un élément de sortie sur le dispositif de classification (70), **en ce que** la suspension classée, fournie par le dispositif de classification (70), est envoyée à un dispositif de mesure de concentration (72), **en ce qu'**une valeur de concentration de particules de résine échangeuse d'ions dans la suspension est déterminée par le dispositif de mesure de concentration (72), **en ce que** la suspension classée n'est fournie pour le prélèvement par un deuxième dispositif de pompage (26) que lorsque par comparaison la valeur de concentration déterminée atteint ou excède une valeur de concentration fixée, et **en ce que**, lorsque la valeur de concentration fixée n'est pas atteinte, la suspension classée est renvoyée dans le récipient (56).

2. Système de traitement (10) de résine échangeuse d'ions selon la revendication 1, **caractérisé en ce que** le dispositif de mesure de concentration (72) est un dispositif de mesure de densité ou un dispositif de mesure de turbidité.

3. Système de traitement (10) de résine échangeuse d'ions selon la revendication 1 ou 2, **caractérisé en ce qu'**un dispositif de fragmentation (66) de résine échangeuse d'ions est également commandé par le dispositif de commande.

4. Système de traitement (10) de résine échangeuse d'ions selon l'une quelconque des revendications précédentes, **caractérisé en ce qu'**une solution d'hydroxyde de sodium est stockée dans un troisième réservoir de stockage (32), et **en ce qu'**au besoin de la solution d'hydroxyde de sodium du troisième réservoir de stockage (32) est introduite dans le dispositif d'alimentation en eau (28) par un quatrième dispositif de pompage (34).

5. Système de traitement (10) de résine échangeuse d'ions selon l'une quelconque des revendications précédentes, **caractérisé en ce que** le gaz séparé provenant de l'élément d'évacuation de gaz est envoyé à un premier condenseur (40), et **en ce que** le liquide séparé provenant de l'élément d'évacuation de liquide est envoyé, en fonction des composants du liquide séparé, soit à un dispositif d'évaporation (48) et ensuite une vapeur d'eau provenant du dispositif d'évaporation (48) est envoyée à un deuxième condenseur (50), soit à un dispositif de séchage en fût (52).

6. Système de traitement (10) de résine échangeuse d'ions selon la revendication 5, **caractérisé en ce qu'**un condensat d'eau provenant du premier condenseur (40) et une eau condensée provenant du deuxième condenseur (50) sont envoyés à un réservoir (42) de condensat.

7. Système de traitement (10) de résine échangeuse d'ions selon la revendication 6, **caractérisé en ce que** de l'eau provenant du réservoir (42) de condensat est au besoin envoyée au dispositif d'alimentation en eau (28).

8. Système de traitement (10) de résine échangeuse d'ions selon l'une quelconque des revendications précédentes 7 à 10, **caractérisé en ce que** le récipient (56) comporte un premier dispositif d'agitation (60) qui comporte un élément d'agitation par lequel la répartition des particules de résine échangeuse d'ions dans le liquide est homogénéisée dans le récipient (56).

9. Système de traitement (10) de résine échangeuse d'ions selon l'une quelconque des revendications précédentes 7 à 11, **caractérisé en ce que** le récipient (56) comporte un deuxième dispositif d'agitation (62) qui comporte un élément d'agitation-fragmentation par lequel les particules de résine échangeuse d'ions dans le liquide peuvent être fragmentées dans le récipient (56).

10. Procédé pour le traitement de résine échangeuse d'ions chargée de radioactivité, comprenant les étapes suivantes :
• fragmentation de résine échangeuse d'ions chargée de radioactivité jusqu'à ce qu'une taille préétablie de particule de résine échangeuse d'ions soit dépassée négativement dans une suspension de liquide et de résine échangeuse d'ions dans un récipient (56) et que cette suspension soit fournie en tant que suspension classée,
• prélèvement d'un nouveau courant partiel de suspension classée et surveillance d'une valeur de concentration de particules de résine échangeuse d'ions dans le nouveau courant partiel
• fourniture de la suspension classée seulement lorsque par comparaison la valeur de concentration déterminée atteint ou excède une valeur de concentration fixée, pour le prélèvement par un deuxième dispositif de pompage (26), la suspension classée étant renvoyée dans le récipient (56) lors d'un dépassement négatif de la valeur de concentration déterminée par comparaison à la valeur de concentration fixée,
• introduction d'air ainsi que d'une suspension de combustible, d'eau et de résine échangeuse d'ions fragmentée, sous forme de suspension classée ayant au moins une valeur de concentration déterminée, dans un réacteur d'oxydation (12) à eau supercritique,
• régulation de chaque quantité d'air, de combustible, d'eau et de résine échangeuse d'ions broyée, envoyée au réacteur d'oxydation (12) à eau supercritique, de sorte que toutes les fractions organiques dans la suspension sont dissociées par le réacteur d'oxydation (12) à eau supercritique en un mélange de gaz, qui comporte du dioxyde de carbone et de la vapeur d'eau, et de liquide, qui comporte de l'eau et des ions inorganiques dissous ou libres,
• séparation de gaz à partir du mélange.

11. Procédé selon la revendication 10, **caractérisé en ce que** de la solution d'hydroxyde de sodium est au besoin introduite dans l'eau, avant que l'eau ne soit envoyée au réacteur d'oxydation (12) à eau supercritique.

12. Procédé selon la revendication 10 ou 11, **caractérisé en ce que** le gaz séparé est séché dans un premier condenseur (40) et est ensuite rejeté dans l'environnement.

13. Procédé selon l'une quelconque des revendications 10 à 12, **caractérisé en ce que** le liquide est envoyé, en fonction de ses composants, soit à un dispositif d'évaporation (48), par lequel l'eau présente dans le liquide est évaporée et les résidus humides restants sont envoyés amenés à un dispositif de séchage en fût (52), la vapeur d'eau étant ensuite condensée en eau dans un deuxième condenseur (50), soit le liquide est directement envoyé à un dispositif de séchage en fût (52), dans lequel les fractions d'eau présentes sont extraites du liquide jusqu'à ce qu'il ne reste que des résidus.

14. Procédé selon l'une quelconque des revendications 10 à 13, **caractérisé en ce que** de l'eau provenant du premier ou/et du deuxième condenseur (50) est envoyée à un réservoir (42) de condensat, et **en ce qu'**une eau recueillie dans le réservoir (42) de condensat est envoyée au choix dans un système de traitement d'eaux usées ou au dispositif d'alimentation en eau (28).

15. Procédé selon l'une des revendications 10 à 14, **caractérisé en ce qu'**une suspension d'eau et de particules de résine échangeuse d'ions se trouvant dans le récipient (56) est homogénéisée par un premier dispositif d'agitation (60).

16. Procédé selon la revendication 15, **caractérisé en ce que** la résine échangeuse d'ions se trouvant dans le récipient (56) est pré-fragmentée dans la suspension par un deuxième dispositif d'agitation (62).

17. Procédé selon l'une quelconque des revendications 15 et 16, **caractérisé en ce que** la suspension homogénéisée se trouvant dans le réservoir (56) est acheminée au moyen d'une pompe de circulation (64) vers le dispositif de fragmentation (66) de résine échangeuse d'ions, **en ce que** les particules de résine échangeuse d'ions dans la suspension sont fragmentées dans le dispositif de fragmentation (66) de résine échangeuse d'ions, et **en ce qu'**après un passage dans le dispositif de fragmentation (66) de résine échangeuse d'ions les particules de résine échangeuse d'ions sont renvoyées dans le récipient (56) sous forme de particules de résine échangeuse d'ions fragmentées dans la suspension .

18. Procédé selon la revendication 17, **caractérisé en ce que** la suspension est transportée pendant un espace de temps préétabli depuis le réservoir (56) jusqu'au dispositif de fonctionnellement (66) de résine échangeuse d'ions et les particules de résine échangeuse d'ions y sont fragmentées, avant que ne soit activée une pompe de prélèvement (68) qui envoie un curant partiel de la suspension depuis le réservoir (56) à un dispositif de classification (70), **en ce que** les particules de résine échangeuse d'ions qui excèdent la taille déterminée de particule de résine échangeuse d'ions sont séparées de la suspension par le dispositif de classification (70), et **en ce que** les particules de résine échangeuse d'ions séparées sont renvoyées dans le récipient (56) avec une partie de la suspension, et **en ce qu'**une suspension restante comportant des particules de résine échangeuse d'ions qui sont de taille égale ou inférieure à la taille fixée de particule de résine échangeuse d'ions est fournie à un élément de sortie sur le dispositif de classification (70).

19. Procédé selon la revendication 18, **caractérisé en ce que** la suspension restante est acheminée depuis de l'élément de sortie sur le dispositif de classification (70) vers un dispositif de mesure de concentration (72), **en ce que** dans la suspension est déterminée par le dispositif de mesure de concentration (72) une proportion de particules de résine échangeuse d'ions dont la taille est supérieure à une valeur fixée de la taille de particule de résine échangeuse d'ions, **en ce que**, si la valeur fixée de la proportion est atteinte ou excédée, la suspension est renvoyée dans le récipient (56), et **en ce que**, si la valeur fixée de la proportion n'est pas atteinte, la suspension est fournie pour le prélèvement par deuxième dispositif de pompage (26).
